# DEMANDE DE BREVET EUROPEEN

(11) **EP 1 429 562 A1**
(43) Date de publication de la demande: **16.06.2004**
(21) Numéro de dépôt: 03104673.3
(22) Date de dépôt: 12.12.2003
(51) Int. Cl.: H04N 7/24

(54) **Procédé de commutation de signaux numériques avant émission, commutateur et signal résultant**

(30) Priorité: 13.12.2002 FR 0215847
(71) Demandeur: Thales, 92200 Neuilly Sur Seine (FR)
(72) Inventeur: Le Bars, Eric THALES Intellectual Property, 94117 ARCUEIL CEDEX (FR); Berthelot, Christophe THALES Intellectual Property, 94117 ARCUEIL CEDEX (FR); Vermeulen, Samuel THALES Intellectual Property, 94117 ARCUEIL CEDEX (FR)
(74) Mandataire: Lucas, Laurent Jacques

(57) **Abrégé**

L'invention concerne un procédé de commutation de signaux numériques comportant des paquets de données complètes et de données différentielles lors de l'émission, en particulier les signaux MPEG-2. Les risques majeures sont les réactions erronées du décodeur standardisé (T-STD) en raison de la commutation.

L'invention propose un tel procédé de commutation comportant les étapes suivantes:
- la réception d'un premier signal s1 numérique,
- la réception d'un deuxième signal s2 numérique,
- la réception d'une commande de commutation,
- l'émission du premier signal s1 avant la commutation indiquée par la commande de commutation, et
- l'émission du deuxième signal s2 après la commutation indiquée par la commande de commutation, l'émission du deuxième signal s2 commençant avec le paquet de données complètes le plus proche de l'instant indiqué par la commande de commutation de telles sorte que la reproduction du deuxième signal s2 débute par la reproduction de ce paquet de données complètes.

## Description

L'invention concerne un procédé de commutation de signaux numériques comportant des paquets de données complètes et de données différentielles lors de l'émission. En particulier, le procédé de commutation selon l'invention est adapté aux signaux vidéo de diffusion numériques tels que les signaux MPEG-2/DVB par exemple.

Dans le monde de la télévision, la demande du téléspectateur fait croître le nombre de sources de programmes audiovisuelles de plus en plus rapidement. Les distributeurs de ces programmes ont la possibilité de créer des nouveaux bouquets qui, dans le cadre de réseaux cellulaires tels que la Télévision de Terre, peuvent être personnalisés en fonction de la région de diffusion. C'est ainsi qu'aujourd'hui avec le mode de distribution de la télévision analogique de terre, les chaînes personnalisent leurs contenus pour diffuser des programmes d'informations régionales et locales.

Le passage de la diffusion des programmes en numérique (MPEG-2/DVB) permet l'optimisation de l'utilisation des fréquences radios en divisant par 8 la bande passante nécessaire à la diffusion d'un programme. Il est donc possible de diffuser 8 fois plus de programmes et ainsi de répondre à la demande du téléspectateur pour l'accès à de nouveaux programmes et services.

Cette avancée technologique que permet la compression numérique profite donc à la diffusion de nouveaux services. Néanmoins, il est nécessaire de conserver les services déjà disponibles en télévision analogique comme le décrochage local.

En effet, dans le monde de la télévision numérique, le nombre de services périphérique et plus généralement de signaux primaires tendant à augmenter de plus en plus rapidement, les opérateurs de diffusion ont la possibilité de créer de nouveaux bouquets, dédiés à leurs clients. Le contenu de ces bouquets est base sur la réutilisation de services existants avec la possibilités de nouveaux services locaux.

L'opération de génération d'un nouveau multiplexage numérique à partir d'entrées numériques multiplexées existantes est appelée "re-multiplexage".

Un re-multiplexeur est essentiellement un équipement, recevant un nombre de signaux d'entrée et permettant à l'opérateur de sélectionner parmi ces signaux d'entrée quel service il désire injecté dans son propre réseau, certains de ces signaux étant éventuellement des sources locales tels que des codeurs MPEG2, des serveurs vidéo, des portails IP (IP gateways), ...

Comme le re-multiplexage des programmes, l'insertion des services locaux nécessite des traitements spécifiques des programmes. En plus de ce traitement commun, le traitement complémentaire est exigé pour effectuer l'insertion de services locaux. La fonction de traitement des signaux effectuant l'insertion de programmes dans un signal multiplexé existant est plus généralement appelée une "Commutation" (ou "Splicing" en anglais) et le dispositif est appelé "Commutateur" (ou "Splicer" en anglais).

Une première solution pour répondre au besoin passe par un retour dans le domaine naturel (analogique),qui consiste à décoder et re-coder les programmes à insérer. Cette solution est coûteuse, peu fiable et complexe à mettre en oeuvre puisqu'elle utilise plusieurs équipements. Elle nécessite un traitement avec une puissance de calcul élevé. Pour palier cette complexité, des produits existants intègrent la double fonction de décodage et re-codage, mais leurs coûts les rends peu compétitifs sur le marché de la télévision herzienne avec un grand déploiement.

La contrainte d'une solution économique interdit une méthode de commutation en passant par le domaine naturel (analogique). La solution passe donc par un traitement de la commutation directement dans le domaine numérique. La principale difficulté du traitement dans le domaine numérique, MPEG-2 dans notre cas, réside dans le fait que les images d'un programme ne sont pas transmises dans l'ordre d'affichage. En effet, pour obtenir une compression maximum, MPEG-2 défini des groupes d'images (GOP) dans lequel, certaines images ne sont pas entièrement transmises, puisque généralement dans une séquence audiovisuelle, il existe un nombre important de données redondantes d'une image à l'autre.

Les risques majeurs sont les réactions erronées du décodeur standardisé (T-STD) en raison de la commutation brutale vers/ou d'un service local. Par exemple, des erreurs mineures peuvent se produire comme une image contenant une ou plusieurs mosaïque en raison d'une erreur de décodage vidéo (notamment lorsque le décodeur ne possède pas l'image complète mais seulement les images différentielle). Des erreurs plus importantes peuvent être le gel des images en raison de la non alimentation du décodeur - les images n'étant pas transmises dans l'ordre de d'affichage - . L'erreur majeure réside dans l'affichage d'une image noire induite par le plantage du décodeur.

La présente invention permet de palier ces inconvénients en recalant l'instant de commutation sur l'image complète la plus proche du programme diffusé après commutation.

L'invention concerne un procédé de commutation de signaux numériques comportant au moins deux types de paquets de données: des paquets de données complètes et des paquets de données différentielles, ledit procédé comportant les étapes suivantes:
- la réception d'un premier signal s1 numérique,
- la réception d'un deuxième signal s2 numérique,
- la réception d'une commande de commutation,
- l'émission du premier signal s1 avant la commutation indiquée par la commande de commutation, et
- l'émission du deuxième signal s2 après la commutation indiquée par la commande de commutation, l'émission du deuxième signal s2 commençant avec le paquet de données complètes le plus proche de l'instant indiqué par la commande de commutation de telles sorte que la reproduction du deuxième signal s2 débute par la reproduction de ce paquet de données complètes.

En outre, l'émission du premier signal s1 se termine, éventuellement, par l'émission du dernier paquet de données reçu avant le commencement de l'émission du deuxième signal s2 de telle sorte que la reproduction du premier signal s1 se termine par la reproduction d'un paquet de données complètes.

Un autre objet de l'invention est un commutateur mettant en oeuvre le procédé de commutation et comportant :
- une première entrée pour la réception du premier signal s1,
- une deuxième entrée pour la réception du deuxième signal s2,
- une sortie pour l'émission du signal résultant composé par le premier signal s1 avant la commutation indiquée par la commande de commutation et le deuxième signal s2 après la commutation indiquée par la commande de commutation.

Dans une variante de l'invention, le commutateur comporte un lecteur de tatouage relié à la première entrée.

L'invention propose en outre un système de production et de diffusion de signaux comportant au moins :
- une chaîne de production d'un premier et d'un deuxième signal s2, ladite chaîne de production comportant un dispositif d'écriture de tatouage recevant le premier signal s1, une commande de commutation et fournissant un premier signal s1 tatoué par la commande de commutation, et
- une chaîne d'émission comportant un commutateur avec lecteur de tatouage.

L'invention concerne aussi un signal de diffusion numérique comportant un premier signal s1 suivi d'un deuxième signal s2 débutant par un paquet de données complètes obtenu par ce procédé de commutation.

Les caractéristiques et avantages de l'invention apparaîtront plus clairement à la lecture de la description, faite à titre d'exemple, et des figures s'y rapportant qui représentent :
- Figure 1, illustration du procédé de commutation appliqué à des programmes vidéo,
- Figures 2a et 2b, représentation schématique du choix du point de début d'émission du deuxième signal s2 par rapport à sa reproduction, selon l'invention, la figure 2a illustrant le recalage arrière du point de commutation, et la figure 2b illustrant le recalage avant du point de commutation,
- Figures 3a et 3b, représentations schématiques de la mise en oeuvre du procédé de commutation, selon l'invention, la figure 3a proposant une représentation schématique des premier et deuxième signaux s1 et s2, et du signal résultant émis lors de la mise en oeuvre du procédé de commutation, la figure 3b proposant une représentation schématique de reproduction du signal résultant de la mise en oeuvre du procédé de commutation,
- Figures 4a et 4b, représentations schématiques de la mise en oeuvre du procédé de commutation, selon l'invention, la figure 4a proposant une représentation schématique des premier et deuxième signaux s1 et s2 audio et vidéo, et du signal résultant audio et vidéo émis lors de la mise en oeuvre du procédé de commutation, la figure 4b proposant une représentation schématique de reproduction du signal résultant audio et vidéo de la mise en oeuvre du procédé de commutation,
- Figure 5, représentation schématique de l'horloge des premier et deuxième signaux s1 et s2 audio-vidéo, et du signal résultant audio-vidéo lors de la mise en oeuvre du traitement de la synchronisation audio et vidéo dans le procédé de commutation, selon l'invention,
- Figure 6, schéma bloc des parties des chaînes de production et d'émission permettant la commande de la commutation par tatouage du premier signal s1, selon l'invention.

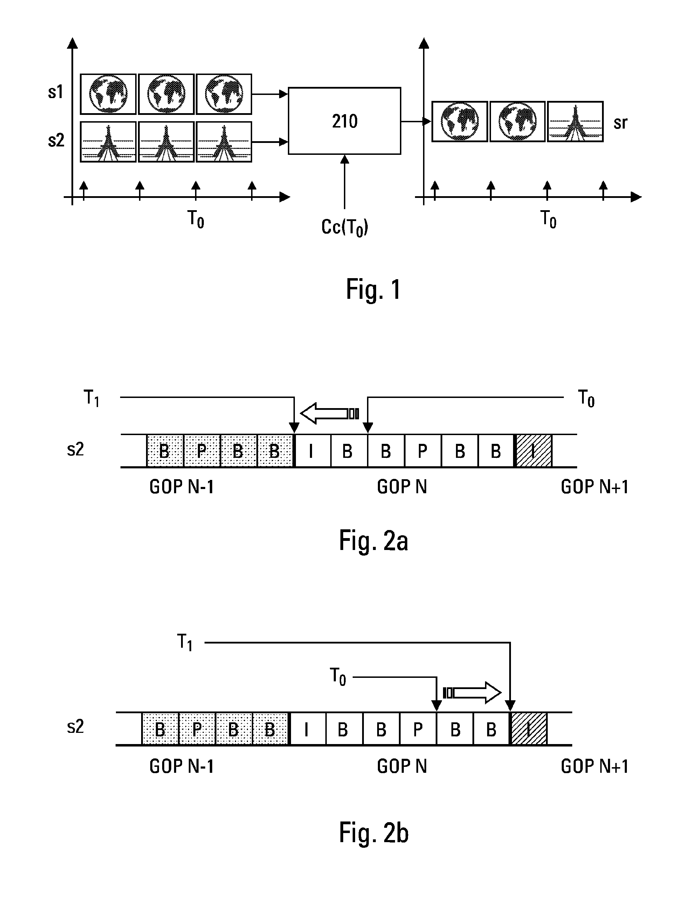

La Figure 1 illustre le principe de commutation. Le commutateur 210 reçoit un premier signal s1, un deuxième signal s2 et une commande de commutation C_{C}(T₀) à l'instant T₀. Le commutateur 210 compose alors le signal résultant sr comme étant égal au premier signal s1 jusqu'à l'instant T₀ et au deuxième signal s2 après.

Le procédé de commutation de signaux numériques, selon l'invention, comporte donc les étapes suivantes:
- la réception d'un premier signal s1 numérique s1,
- la réception d'un deuxième signal s2 numérique s2,
- la réception d'une commande de commutation Cc(T),
- l'émission du premier signal s1 avant la commutation indiquée par la commande de commutation (sr(t)=s1 (t) pour t<T), et
- l'émission du deuxième signal s2 après la commutation indiquée par la commande de commutation (sr(t)=s1 (t) pour t>T).

Le procédé de commutation selon l'invention s'applique, en particulier, aux signaux numériques comportant au moins deux types de paquets de données: des paquets de données complètes et des paquets de données différentielles. L'émission du deuxième signal s2 commence avec le paquet de données complètes le plus proche de l'instant indiqué par la commande de commutation de telles sorte que la reproduction du deuxième signal s2 débute par la reproduction de ce paquet de données complètes.

Les premier et deuxième signaux s1 et s2 peuvent comporter plusieurs types de paquets de données complètes dont au moins un paquet de données complètes introductives et au moins un paquet de données complètes prédites. Dans une variante du procédé de commutation utilisant ce type de premier et deuxième signaux s1 et s2, l'émission du deuxième signal s2 commence alors avec le paquet de données complètes introductives le plus proche de l'instant indiqué par la commande de commutation.

Les figures 2a et 2b illustrent le procédé de commutation avec une émission du deuxième signal s2 commençant par le paquet de données complètes introductives le plus proche de l'instant indiqué par la commande de commutation de telles sorte que la reproduction du deuxième signal s2 débute par la reproduction de ce paquet de données complètes introductives. Les signaux des figures 2a et 2b sont des signaux numériques vidéo de type MPEG-2 comportant les groupes de paquets constitués par les groupes d'images (GOP), les paquets de données complètes constitués par les images I et P, les paquets de données différentielles constitués par les images B. Les images I sont des paquets de données complètes introductives et les images P des paquets de données complètes prédites et plusieurs paquets de données différentielles.

Les premier et deuxième signaux s1 et s2 peuvent comporter des groupes de paquets comportant un seul paquet de données complètes introductives par lequel il débute, les paquets de données différentielles permettent la reproduction en utilisant des paquets de données complètes prédites futures. Donc, la transmission des paquets est réalisé dans le groupe de paquets dans un ordre différent de celui de leur reproduction dans le groupe.

Le deuxième signal s2 devant obligatoirement commencé par un paquet de données complète, notamment introductive (image de type I, dans notre exemple), le recalage de l'instant de commutation à T₁ se fait sur l'image I du deuxième signal s2 reproduit la plus proche de l'instant réel de commutation T₀.

Dans le cas de la figure 2a, l'image I du deuxième signal s2 reproduit la plus proche de l'instant réel de commutation T₀ est reproduite à partir de l'instant T₁ avant l'instant T₀. Le procédé de commutation comporte alors le recalage arrière de l'instant de commutation: l'instant de commutation recalé est T₁. Ainsi, l'émission du deuxième signal s2 commencera donc par cette image I.

Dans le cas de la figure 2b, l'image I du deuxième signal s2 reproduit la plus proche de l'instant réel de commutation T₀ est reproduite à partir de l'instant T₁ après l'instant T₀. Le procédé de commutation comporte alors le recalage avant de l'instant de commutation: l'instant de commutation recalé est T₁. Ainsi, l'émission du deuxième signal s2 commencera donc par cette image I.

Par ce recalage de l'instant de commutation, la distribution des paquets de données des premier et deuxième signaux s1 et s2 n'est pas modifiée. Ainsi, est évitée l'utilisation de mémoires tampons nécessaires dans le collage du dernier groupe de paquets de données du premier signal s1 et du dernier groupe de paquets de données du deuxième signal s2. Pour palier l'absence de modification de la distribution des paquets de données, l'instant de commutation est ajusté par rapport à l'ordre réel de reproduction. Cette adaptation ne dépasse jamais la taille d'un demi groupe de paquets de données comme l'illustrent les figures 2a et 2b.

Ainsi, la commande de commutation Cc(T₀) est obtenu avec une avance d'un groupe de paquet de données soit 1/2 secondes dans notre exemple.

La résolution de la commutation selon l'invention est donc à un demi groupe de paquets de données près. Dans notre exemple avec des signaux MPEG-2, cela équivaut à 1/4 seconde de précision: cette précision étant acceptable pour les diffusions télévisuelles.

La commande de commutation Cc(T₀) à l'instant T₀ utilise comme référence le domaine de reproduction des signaux. Dans certains cas, le codeurs peuvent adopter une stratégie de transmission des images avec beaucoup d'avance sur la reproduction en mettant à profit les mémoires des décodeurs. Le procédé de commutation selon l'invention fonctionne dans le domaine de l'émission, la commande de commutation Cc(T₀) à l'instant T₀ doit être connue pour pouvoir mettre en oeuvre ce procédé lors de l'émission des premier et deuxième signaux s1 et s2 et non pas au moment de reproduction. L'expérimentation sur des signaux de type MPEG-2 a montré que ce délai ne dépasse jamais 1 GOP (1/2 seconde). Dans ces conditions, l'étape de réception de la commande de commutation Cc(T₀) à l'instant T₀ est donc effectué au moins 1 GOP avant l'instant T₀.

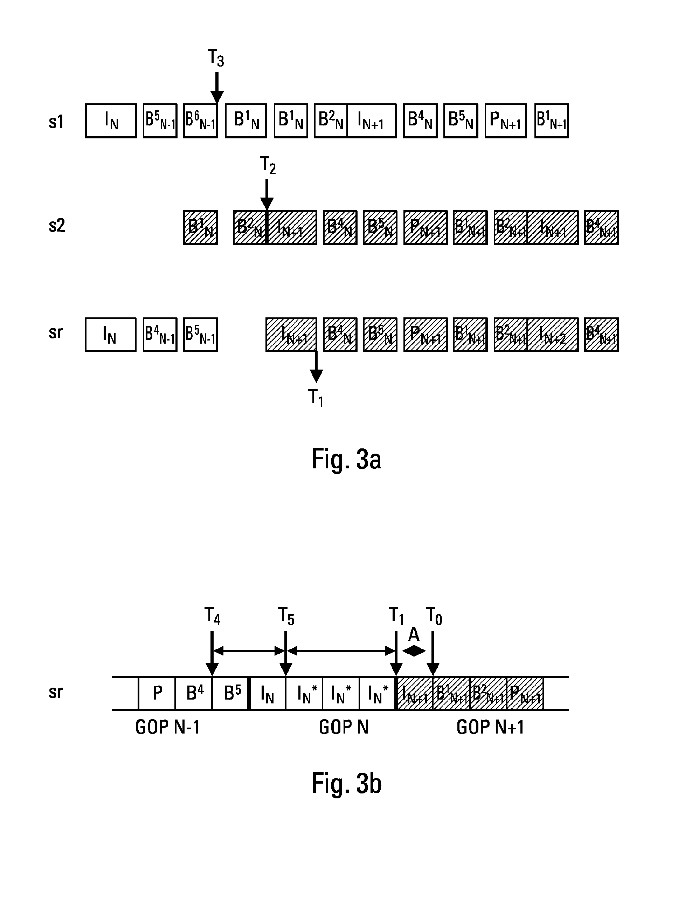

Les figures 3a et 3b montrent la mise en oeuvre du procédé de commutation selon l'invention. Les signaux de cet exemple sont vidéo de type MEPG-2. Les flux des premier et deuxième signaux s1 et s2 sont considérés synchronisés à la reproduction.

Sur la figure 3b représentant la reproduction du signal résultant de la mise en oeuvre du procédé de commutation selon l'invention:
T₀ est l'instant de commutation réel indiqué par la commande de commutation Cc(T₀).
T₁ est l'instant de commutation recalé dans le domaine de reproduction déterminé comme indiqué dans la description des figures 2 et 2b: il correspond à l'instant de début de reproduction du paquet de données complètes s2(I_{N+1}), notamment introductive (image de type I, dans notre exemple) le plus proche du deuxième signal s2.

A = T₀ - T₁ est l'intervalle de temps de recalage de la commutation dans le domaine de reproduction.

Sur la figure 3a représentant sur la première ligne le premier signal s1 tel que reçu, sur la deuxième ligne le deuxième signal s2 tel que reçu, et sur la troisième ligne le signal résultant de la mise en oeuvre du procédé de commutation selon l'invention tel qu'émis:

T₂ est l'instant de commencement de la réception de l'image s2(I_{N+1}) reproduite à l'instant de commutation recalé T₁ du deuxième signal s2. T₂ est donc l'instant de commutation recalé dans le domaine d'émission. L'émission du signal résultant sr comporte ainsi l'émission du deuxième signal s2 à partir de cet instant T₂: sr(t) = s2(t) pour t ≥ T₂ en mode émission.

L'étape d'émission du premier signal s1 du procédé de commutation selon l'invention peut être configurée de telles sorte qu'elle se termine par l'émission du dernier paquet de données reçu B, P ou I avant le commencement T₂ de l'émission du deuxième signal s2 de telle sorte que la reproduction du premier signal s1 se termine par la reproduction d'un paquet de données complètes P ou I avant le début de reproduction du deuxième signal s2.

L'émission des paquets de données complètes l_{N} et P_{N+1} avant les paquets de données différentielles respectivement (B⁴_{N-1}, B⁵_{N-1}) et (B¹_{N+1}, B²_{N+1}) peut être configurée de telle sorte que la reproduction de ces paquets de données complètes I_{N} et P_{N+1} est effectuées après la reproduction de ces paquets de données différentielles (B⁴_{N-1}, B⁵_{N-1}) et (B¹_{N+1}, B²_{N+1}) comme le montrent l'exemple des figures 3a et 3b.

Dans ce cas, la configuration de l'émission du premier signal s1 de telles sorte qu'elle se termine par l'émission du dernier paquet de données reçu B, P ou I avant le commencement T₂ de l'émission du deuxième signal s2 de telle sorte que la reproduction du premier signal s1 se termine par la reproduction d'un paquet de données complètes P ou I avant le début de reproduction du deuxième signal s2, peut être réalisée de la manière suivante:

L'émission du premier signal s1 se termine par l'émission du dernier paquet de données différentielles s1(B) reçu avant le commencement T₂ de l'émission du deuxième signal s2 et précédant un paquet de données complètes I, P.

Le signal de diffusion numérique résultant sr de la commutation selon l'invention comporte ainsi un premier signal s1 suivi d'un deuxième signal s2 débutant par un paquet de données complètes, s2(I_{N+1}) par exemple, obtenu par le procédé de commutation décrit ci-dessus.

T₃ est ainsi, dans l'exemple de la figure 3b, l'instant de fin de réception de l'image s1(B⁵_{N-1}) du premier signal s1 précédant un paquet de données complètes (Image de type I ou P, par exemple): s1(P_{N}) et l'instant T₂ (T ₃ < T₂). L'émission du signal résultant sr comporte ainsi l'émission du premier signal s1 jusque cet instant T₃: sr(t) = s1 (t) pour t ≤ T₃ en mode émission.

Sur la figure 3b représentant la reproduction du signal résultant sr de la mise en oeuvre du procédé de commutation selon l'invention:

T₄ est l'instant de reproduction du dernier paquet de données s1(B⁵_{N-1}) du premier signal s1 émise dans le signal résultant sr. La reproduction du dernier paquet de données s1(B⁶_{N-1}) du premier signal s1 émis précède la reproduction d'un paquet de données complètes I ou P du premier signal s1: s1(I_{N}) sur la figure 3b.

T₅ est l'instant de fin de reproduction du dernier paquet de données s1(I_{N}) du premier signal s1. Ce paquet sera dupliqué I*_{N} en sortie par le décodeur, notamment dans le cas de signaux de type MPEG-2, en cas d'absence de nouveau paquet de données à reproduire. Dans l'exemple de signaux de type MPEG-2, le nombre d'image dupliquées sera compris entre 0 et le nombre d'image B entre I ou P du premier signal s1 auquel sera additionné le nombre d'image B entre I ou P du deuxième signal s2.

Dans le cadre de la diffusion de programme télévisuels, le nombre d'images dupliquées sera compris entre 0 et 4 images. Ce nombre d'images dupliquées est invisible à l'oeil et correspond à un gel d'image de 200ms. Si le retard à la reproduction du deuxième signal s2 est supérieur à celui du premier signal s1, la différence entre le retard de reproduction du premier signal s1 et le retard de reproduction du deuxième signal s2 en nombre d'image correspondantes est à ajouter aux nombre d'images dupliquées.

Pour réduire le nombre de paquets de données dupliquées, la réception des images du deuxième signal est retardée. Ainsi, le premier signal est émis plus longtemps sous la forme du signal résultant réduisant d'autant le nombre de paquets de données dupliquées. Cette opération entraîne une augmentation du débit de réception du deuxième signal. L'émission du deuxième signal s2 sous la forme du signal résultant sr peut alors comporter soit la réduction du débit d'émission du deuxième signal s2, soit la suppression de plusieurs paquets de données différentielles (image de type B, par exemple) du deuxième signal s2 afin de revenir à un débit d'émission du deuxième signal s2 équivalent à celui existant sans le retard de réception.

Dans le cas de signaux de type MPEG-2, les images B* (non représentées) du deuxième signal s2 référençant des images I et P du deuxième signal s2 qui n'ont pas été transmises sont remplacées par du bourrage vidéo. Elles ne sont pas reproduites.

B = T₁ - T ₅ est la période de reproduction de paquets de données absents. Cette période est supérieur ou égale à 0s. Si cette période est inférieure à 0, l'instant T3 doit être décalé sur la fin de réception de l'image B du premier signal s1 précédant une image I ou P précédant l'instant choisi en premier.

C = T₅ - T₄ est la période incompressible de reproduction des deux dernières images du premier signal s1. Cette période est égale à 80ms en diffusion de programmes télévisuels.

Pendant le procédé de commutation, les paquets de données du premier signal s1 reçu après l'instant T₃ sont supprimées, c'est-à-dire qu'ils ne sont pas émis dans le signal résultant sr. Pour réaliser cette suppression, l'instant T₁ doit être connu. Pour cela, lors de l'étape de réception du premier signal s1 dans le procédé de commutation, les paquets de données du premier signal s1 peuvent être entrées dans un tampon configurée de telle sorte que le retard créé en réception entre les premier et deuxième signaux s1 et s2 permette de connaître T₁ pour supprimer les paquets de données du premier signal s1 après T₃ (retard d'un GOP par exemple pour des signaux de type MPEG-2).

MPEG-2 a défini un modèle de décodeur permettant de simuler les taux de remplissage des mémoires du décodeur. Dans une variante du procédé de commutation respectant ce modèle de décodeur, la taille des paquets de données du deuxième signal est modifiée en fonction du remplissage de la mémoire du décodeur au moment et après la commutation pour tendre vers des taux de remplissage tel qu'il aurait été sans la commutation. Lorsque les décodeurs MPEG-2 possèdent plus de mémoire que recommandé par la norme, cette modification de la taille des paquets de données du deuxième signal peut être supprimée d'autant qu'il s'agit d'une fonction coûteuse.

Le premier signal s1 et le deuxième signal s2 peuvent aussi comporter des trames audio. Notamment, les signaux numériques s1 et S2 peuvent être codés en MPEG-2 comportant les groupes de paquets constitués par les groupes d'images (GOP), les paquets de données complètes constitués par les images I et P, les paquets de données différentielles constitués par les images B, et des trames audio.

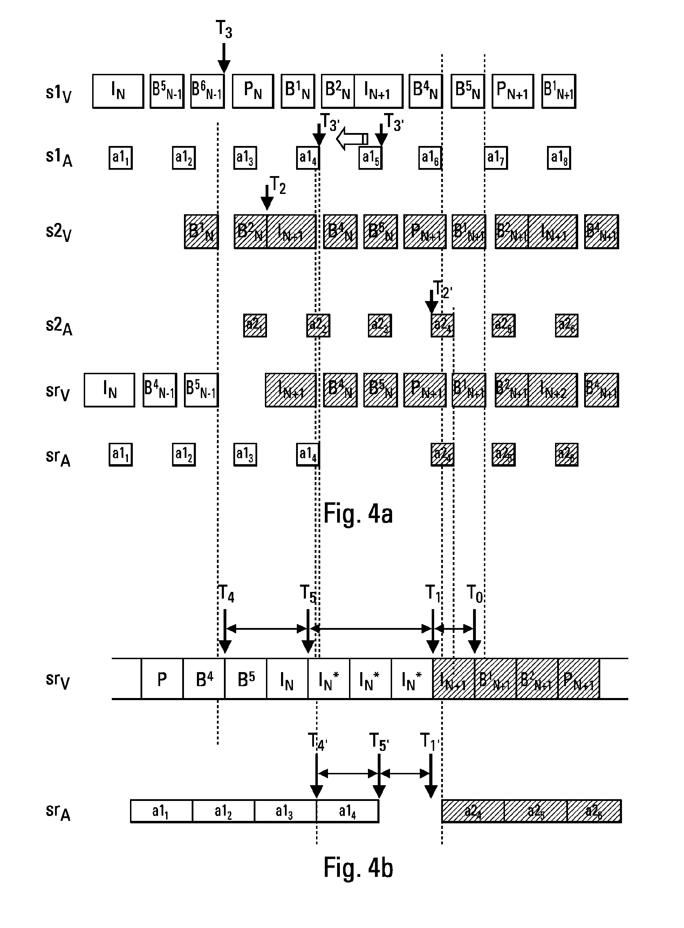

Les figures 4a et 4b montre une illustration de la commutation audio dans le cas de signaux audiovisuel de type MPEG-2. Les flux des différents signaux sont considérés synchronisés à la reproduction.

Sur la figure 4b représentant la reproduction vidéo, sur la première ligne, et audio, sur la deuxième ligne, du signal résultant de la mise en oeuvre du procédé de commutation selon l'invention:

T₀ est l'instant de commutation réel indiqué par la commande de commutation Cc(T₀).

T₁ est l'instant de commutation recalé dans le domaine de reproduction déterminé comme indiqué dans la description des figures 2 et 2b: il correspond à l'instant de début de reproduction du paquet de données complètes s2(I_{N+1}), notamment introductive (image de type I, par exemple) le plus proche du deuxième signal s2.

Sur la figure 4a représentant sur les première et deuxième lignes le premier signal s1 tel que reçu, respectivement sa partie vidéo s1_{V} et audio s1_{A}, sur les troisième et quatrième lignes le deuxième signal s2 tel que reçu, respectivement sa partie vidéo s2_{V} et audio s2_{A}, et sur les cinquièmes et sixième ligne le signal résultant sr de la mise en oeuvre du procédé de commutation selon l'invention tel qu'émis, respectivement sa partie vidéo sr_{V} et audio sr_{A}:

L'étape d'émission du deuxième signal s2 du procédé de commutation selon l'invention commence par la trame audio s2_{A}(a2₄) configurée pour être reproduite avec une image constituée par le paquet de données complètes introductives s2ᵥ(I_{N+1}) avec lequel est commencé l'émission du deuxième signal s2.

T'₂ est ainsi l'instant de début de réception de la trame audio s2_{A}(a2₄) du deuxième signal s2 reproduit après l'instant T₁. L'émission du signal résultant sr comporte ainsi l'émission des trames audio du deuxième signal s2 à partir de cet instant T'₂: sr_{A}(t) = s2_{A}(t) pour t ≤ T'₂ en mode émission.

L'étape d'émission du premier signal s1 du procédé de commutation selon l'invention se termine par:
- l'émission de la dernière trame audio s1_{A}(a1₅) débutant avant l'instant de commencement d'émission du deuxième signal s2 si l'intervalle de temps entre le début d'émission de cette trame audio et le début de l'émission du deuxième signal s2 est supérieur ou égal à la durée d'une trame audio,
- ou l'émission de l'avant-dernière trame audio s1_{A}(a1₄)débutant avant l'instant de commencement d'émission du deuxième signal s2 sinon.

T'₃ est ainsi, dans l'exemple de la figure 4b, l'instant de fin de réception de la trame audio s1_{A}(a1₄) du premier signal s1 précédant T'₂. L'émission du signal résultant sr comporte ainsi l'émission des trames audio du premier signal s1 jusque cet instant T'₃: srₐ(t) = s1ₐ(t) pour t ≤ T'₃ en mode émission.

Sur la figure 4b représentant la reproduction vidéo et audio du signal résultant de la mise en oeuvre du procédé de commutation selon l'invention:

T₄ est l'instant de début de reproduction du dernier paquet de données s1(B⁵_{N-1}) du premier signal s1 émise dans le signal résultant sr. La reproduction du dernier paquet de données s1(B⁵_{N-1}) du premier signal s1 émis précède la reproduction d'un paquet de données complètes I ou P du premier signal s1:s1(I_{N}) sur la figure 4b.

T'₄ est l'instant de début de reproduction de la dernière trame audio s1_{A}(a1₄) du premier signal s1 émise dans le signal résultant sr.

T₅ est l'instant de fin de reproduction du dernier paquet de données s1(I_{N}) du premier signal s1. Ce paquet sera dupliqué I*_{N} en sortie par le décodeur, notamment dans le cas de signaux de type MPEG-2, en cas d'absence de nouveau paquet de données à reproduire. Dans l'exemple de signaux de type MPEG-2, le nombre d'image dupliquées sera compris entre 0 et le nombre d'image B entre I ou P du premier signal s1 auquel sera additionné le nombre d'image B entre I ou P du deuxième signal s2.

T'₅ est l'instant de fin de reproduction de la dernière trame audio s1_{A}(a1₅) du premier signal s1 émise dans le signal résultant sr. Lors de sa reproduction audio, la partie audio du signal résultant sr pourra donc comporter un trou de reproduction . Ce trou de reproduction ne dépassera pas une trame audio au moment de la commutation, ce qui est imperceptible dans le cadre de la diffusion d'un programme télévisuel.

B' = T₁ - T'₅ est la période du trou de reproduction audio. Cette période est supérieure ou égale à 0 s. Si cette période est inférieure à 0, il faut décaler T3' sur la fin de transmission de la trame audio précédente s1_{A}(a1₄) du premier signal s1. Ce qui a été fait dans la figure 4a en exemple.

C' = T'₅ - T'₄ est la période incompressible de reproduction de la dernière trame audio s1_{A}(a1₅) du premier signal s1.

Les premier et deuxième signaux s1 et S2 à commuter ne sont pas nécessairement synchronisés. Pour garantir la continuité du rythme de reproduction à la commutation, il faut recaler le rythme de reproduction des données du deuxième signal s2 sur le rythme de reproduction du premier signal s1.

Pour garantir un maximum d'invisibilité de la commutation au niveau du décodeur, il est intéressant de garantir la continuité de l'horloge numérique du signal résultant sr. L'horloge des signaux est utilisée par les décodeurs pour asservir leurs propres horloges internes sur l'horloge du codeur du signal, la transmission de la dérive de l'horloge de codage du signal actif au décodeur est donc intéressante. Par signal actif est entendu, celui des premier ou deuxième signal s1 ou s2 transmis dans le signal résultant sr.

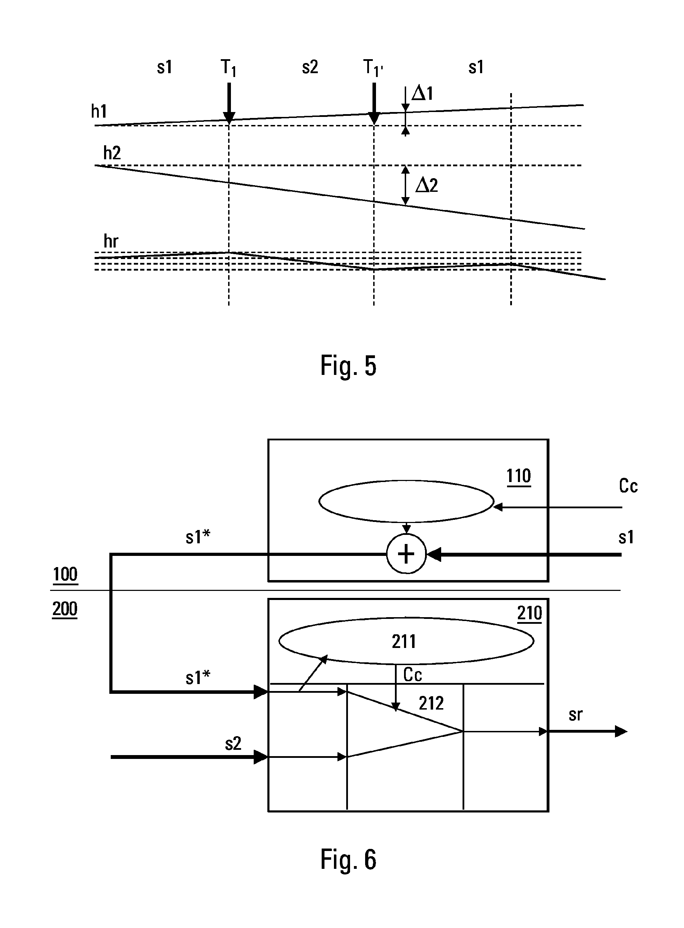

La figure 5 illustre une solution du traitement de la synchronisation audio et vidéo du signal résultant sr.

T1 est l'instant de commutation du premier signal s1 vers le deuxième signal s2. La valeur de l'horloge h2 du deuxième signal s2 est synchronisée sur l'horloge h1 du premier signal s1. Pendant l'émission du deuxième signal s2 dans le signal résultant sr, la dérive Δ2 de l'horloge h2 du deuxième signal s2 est transmise au décodeur.

T'1 est l'instant de commutation du deuxième signal s2 vers le premier signal s1. La valeur de l'horloge h1 du premier signal s1 est synchronisée sur l'horloge h2 du deuxième signal s2. Pendant l'émission du premier signal s1 dans le signal résultant sr, la dérive Δ1 de l'horloge h1 du premier signal s1 est transmise au décodeur.

La synchronisation des horloges h1, h2 et hr consiste en l'ajout de la différence entre les valeurs d'horloge des premier et deuxième signaux s1 et s2 en T1. Cette valeur est constamment ajoutée par la suite aux valeurs d'horloges du deuxième signal s2 et aux valeurs des instants de reproduction des images et des trames audio du deuxième signal s2 pendant son émission dans le signal résultant sr.

Il existe aujourd'hui différentes méthodes pour transmettre la commande de commutation d'un centre de contrôle vers l'équipement devant réaliser la commutation. Cette commande de commutation Cc(T₀) peut donc être fournie de diverses manières comme par l'intermédiaire d'une interface homme machine relié au commutateur 210.

La commutation est telle que décrite précédemment est mise en oeuvre par un commutateur 210 comportant:
- une première entrée pour la réception du premier signal s1,
- une deuxième entrée pour la réception du deuxième signal s2,
- une sortie pour l'émission du signal résultant sr composé par le premier signal s1 avant la commutation indiquée par la commande de commutation Cc et le deuxième signal s2 après la commutation indiquée par la commande de commutation Cc.

La figure 6 propose de tatouer la commande de commutation Cc(T₀) dans le premier signal s1. Par exemple, la transmission de cette commande de commutation Cc(T₀) peut être réalisé par enfouissement de la commande de commutation Cc(T₀) directement dans la vidéo s1_{V} avec une technique de tatouage vidéo (notamment celle décrite par le brevet EP 1173980 en ce qui concerne le tatouage vidéo et la demande de brevet FR 0114857 en ce qui concerne la tatouage et la lecture de commandes dans des programmes, commandes destinés à la chaîne de diffusion/émission). Cette méthode permet de transmettre des informations généralement liées aux informations de droits d'auteur. La commande de commutation Cc(T₀) ainsi enfouie peut être analysée et extraite du premier signal tatoué s1* par un dispositif de lecture de tatouage 211 du commutateur 210 pour déclencher la commutation proprement dite 212 du premier signal s1 vers le deuxième signal s2.

Le système de production et de diffusion de signaux comporte, comme le montre la figure 6 une chaîne de production 100 d'un premier signal s1, et une chaîne d'émission 200 comportant ledit commutateur 210. La chaîne de production 100 comporte un dispositif d'écriture de tatouage 110 recevant le premier signal s1, une commande de commutation Cc(T₀) et fournissant un premier signal tatoué s1* par la commande de commutation. Le commutateur 210 dans cette variante de réalisation comporte un lecteur de tatouage 211 relié à sa première entrée contrôlant la commutation 212.

Le principal avantage d'une telle méthode est qu'elle permet de garantir la présence de la commande de commutation Cc(T₀) même après des traitements avancés sur le programme (re-multiplexage, transcodage, conversion de format, ...).

Cette solution de commutation appliquées à des programmes audiovisuels dans le domaine numérique permet une mise en oeuvre économique pour répondre au besoin de déploiement à grande échelle d'un produit réalisant cette fonction. Cette solution est suffisante pour la problématique de décrochage de programmes régionaux ou locaux car les imperfections de la commutation (images dupliquées) liées au modèle économique de la fonction sont difficilement perceptibles par l'oeil et l'oreille.

Ce type de commutation permet aussi la commutation d'un premier signal comportant un programme à un deuxième signal comportant soit des publicités, soit des jingles...

## Revendications

1. Procédé de commutation de signaux numériques comportant au moins deux types de paquets de données: des paquets de données complètes (I ou P) et des paquets de données différentielles B, ledit procédé comportant les étapes suivantes:
- la réception d'un premier signal s1 numérique,
- la réception d'un deuxième signal s2 numérique,
- la réception d'une commande de commutation Cc(T₀),
- l'émission du premier signal s1 avant la commutation indiquée par la commande de commutation Cc(T₀), et
- l'émission du deuxième signal s2 après la commutation indiquée par la commande de commutation Cc(T₀),
**caractérisé en ce que** l'émission du deuxième signal s2 commence avec le paquet de données complètes I ou P le plus proche de l'instant T₀ indiqué par la commande de commutation Cc(T₀) de telles sorte que la reproduction du deuxième signal s2 débute par la reproduction de ce paquet de données complètes I ou P.

2. Procédé de commutation selon la revendication précédente **caractérisé en ce que** l'émission du premier signal s1 se termine par l'émission du dernier paquet de données I, P ou B reçu avant le commencement de l'émission du deuxième signal s2 de telle sorte que la reproduction du premier signal s1 se termine par la reproduction d'un paquet de données complètes I ou P avant le début de reproduction du deuxième signal s2.

3. Procédé ce commutation selon l'une quelconque des revendications précédentes **caractérisé en ce que** l'émission des paquets de données complètes I ou P avant les paquets de données différentielles B est configurée de telle sorte que la reproduction de ces paquets de données complètes I ou P est effectuées après la reproduction de ces paquets de données différentielles B.

4. Procédé de commutation selon la revendication précédente **caractérisé en ce que** l'émission du premier signal s1 se termine par l'émission du dernier paquet de données différentielles B reçu avant le commencement de l'émission du deuxième signal s2 et précédant un paquet de données complètes I ou P.

5. Procédé de commutation selon l'une quelconque des revendications précédentes **caractérisé en ce que** les premier et deuxième signaux s1 et s2 comporte plusieurs types de paquets de données complètes dont au moins un paquet de données complètes introductives I et au moins un paquet de données complètes prédites P, et plusieurs paquets de données différentielles B sont rassemblées dans un groupe de paquets GOP comportant un seul paquet de données complètes introductives I par lequel il débute, le groupe de paquets GOP permettant de transmettre les paquets de données complètes prédites P et les paquets de données différentielles B dans un ordre différent de celui de leur reproduction.

6. Procédé de commutation selon la revendication précédente **caractérisé en ce que** l'émission du deuxième signal s2 commence avec le paquet de données complètes introductives I le plus proche de l'instant indiqué T₀ par la commande de commutation Cc(T₀).

7. Procédé de commutation selon l'une quelconque des revendications précédentes **caractérisé en ce que** le premier signal s1 et le deuxième signal s2 dont des signaux vidéo.

8. Procédé de commutation selon l'une quelconque des revendications précédentes **caractérisé en ce que** le premier signal s1 et le deuxième signal s2 comporte aussi des trames audio.

9. Procédé de commutation selon la revendication précédente **caractérisé en ce que** l'émission du deuxième signal s2 commence par la trame audio configurée pour être reproduite avec une image constituée par le paquet de données complètes introductives I avec lequel est commencé l'émission du deuxième signal s2.

10. Procédé de commutation selon la revendication précédente
**caractérisé en ce que** l'émission du premier signal s1 se termine par:
- la dernière trame audio débutant avant l'instant de commencement d'émission du deuxième signal s2 si l'intervalle de temps entre le début d'émission de cette trame audio et le début de l'émission du deuxième signal s2 est supérieur ou égal à la durée d'une trame audio,
- ou l'avant-dernière trame audio débutant avant l'instant de commencement d'émission du deuxième signal s2 sinon.

11. Procédé de commutation selon l'une quelconque des revendications 9 ou 10 **caractérisé en ce qu'**il comporte:
- lors de l'émission du premier signal s1, l'émission de la dérive Δ1de l'horloge h1 du premier signal s1,
- lors de l'émission du deuxième signal s2, l'émission de la dérive Δ2 de l'horloge h2 du deuxième signal s2.

12. Procédé de commutation selon l'une quelconque des revendications précédentes **caractérisé en ce que** les signaux numériques sont codés en MPEG-2 comportant les groupes de paquets constitués par les groupes d'images (GOP), les paquets de données complètes constitués par les images I et P, les paquets de données différentielles constitués par les images B, et des trames audio.

13. Procédé de commutation selon l'une quelconque des revendications précédentes **caractérisé en ce qu'**il comporte le tatouage 110 de la commande de commutation Cc(T₀) dans le premier signal s1, et **en ce que** la réception de la commande de commutation comporte la lecture 211 de cette commande de commutation Cc(T₀) tatouée dans le premier signal s1*.

14. Commutateur mettant en oeuvre le procédé de commutation selon l'une quelconque des revendications 1 à 13 **caractérisé en ce qu'**il comporte :
- une première entrée pour la réception du premier signal s1,
- une deuxième entrée pour la réception du deuxième signal s2,
- une sortie pour l'émission du signal résultant sr composé par le premier signal s1 avant la commutation indiquée par la commande de commutation Cc(T₀) et le deuxième signal s2 après la commutation indiquée par la commande de commutation Cc(T₀).

15. Commutateur selon la revendication précédente **caractérisé en ce qu'**il comporte un lecteur de tatouage 211 relié à la première entrée.

16. Système de production et de diffusion de signaux comportant au moins une chaîne de production 100 d'un premier signal s1, une chaîne d'émission 200 comportant un commutateur 210 selon la revendication précédente **caractérisé en ce que** la chaîne de production 100 comporte un dispositif d'écriture de tatouage 110 recevant le premier signal s1, une commande de commutation Cc(T₀) et fournissant un premier signal tatoué s1* par la commande de commutation.

17. Signal de diffusion numérique comportant un premier signal s1 suivi d'un deuxième signal s2 débutant par un paquet de données complètes obtenu par le procédé de commutation selon l'une quelconque des revendications 1 à 13.
